# EUROPÄISCHE PATENTANMELDUNG

(11) **EP 1 041 337 A2**
(43) Veröffentlichungstag der Anmeldung: **04.10.2000**
(21) Anmeldenummer: 00250103.9
(22) Anmeldetag: 28.03.2000
(51) Int. Cl.: F17C 1/00, F17C 5/06, F17C 13/00

(54) **Fahrzeug mit Druckgasbehälter**

(30) Priorität: 31.03.1999 DE 19916385
(71) Anmelder: MANNESMANN Aktiengesellschaft, 40213 Düsseldorf (DE)
(72) Erfinder: Meyer, Knut A.J., 45239 Essen (DE)
(74) Vertreter: Meissner, Peter E., Dipl.-Ing.

(57) **Zusammenfassung**

Die Erfindung betrifft ein Fahrzeug mit einem Druckgasbehälter als Fahrzeugtank, der eine gasdichte Behälterwand (2) und zwei Anschlußstutzen (3, 4) für Druckgasleitungen aufweist.
Die Erfindung ist dadurch gekennzeichnet,
- daß das Volumen des Druckgasbehälters (1) durch eine Trennwand in zwei Teile (6, 7) unterteilt ist, wobei jeder der beiden Teile (6, 7) jeweils durch einen der beiden Anschlußstutzen (3, 4) füllbar und entleerbar ist,
- daß die Trennwand die beiden Teile (6, 7) des Volumens in der Weise voneinander trennt, daß kein nennenswerter unmittelbarer Gasaustausch zwischen den beiden Teilen (6, 7) stattfindet,
- und daß die Trennwand innerhalb des Druckgasbehälters (1) in der Weise ortsveränderlich angeordnet ist, daß durch Änderung der Befüllung bedingte Druckunterschiede zwischen den beiden Teilen (6, 7) des Volumens durch eine Verlagerung oder Verformung der Trennwand ausgeglichen werden.

## Beschreibung

Die Erfindung betrifft ein Fahrzeug mit einem Druckgasbehälter als Fahrzeugtank, der eine gasdichte Behälterwand und zwei Anschlußstutzen für Druckgasleitungen aufweist.

Aus der WO 97/06383 ist ein Gasladesystem für Druckgasbehälter bekannt, die als Fahrzeugtank in gasbetriebenen Fahrzeugen eingesetzt werden. Die schnelle Befüllung von Druckgasbehältern bringt das Problem mit sich, daß durch die Befüllung im Druckgasbehälter ein erheblicher Temperaturanstieg stattfindet, der nach einer Befüllung auf einen Solldruck infolge späterer Abkühlung der Gasfüllung dazu führt, daß der Fülldruck deutlich absinkt, der Druckgasbehälter somit nicht richtig vollgetankt ist. Dieses Problem versuchte man bisher insbesondere dadurch zu entschärfen, daß der Hochdruckbehälter bewußt auf einen höheren Druck als den eigentlichen Solldruck aufgefüllt wurde. Der Überhöhungsdruck beim Füllen war so hoch angesetzt, daß nach Eintreten der Abkühlung nach der Betankung der tatsächlich angestrebte Solldruck vorlag.

Das aus der WO 97/06383 bekannte Gasladesystem löst diese Problematik auf eine andere Weise, ohne daß ein Überhöhungsdruck beim Betanken eingestellt werden muß. Diese Lösung besteht darin, daß der zu befüllende Druckgasbehälter aus einem sehr viel größeren Druckvorratsbehälter zunächst bis zum Eintritt des Druckausgleichs zwischen den beiden Behältern aufgefüllt wird. Im Anschluß daran wird ein Umpumpen der Gasfüllung im zu befüllenden Druckgasbehälter vorgenommen, wobei die erwärmte Gasfüllung des Druckgasbehälters durch eine kalte Gasfüllung aus dem Druckgasvorratsbehälter ersetzt wird. Dieser Umpumpvorgang, der auch Spülvorgang genannt wird, kann ohne großen Energieaufwand in kurzer Zeit vonstatten gehen, da der Austausch nicht gegen ein größeres Druckgefälle herbeigeführt werden muß. Es sind lediglich die Strömungswiderstände der Druckgasleitungen zu überwinden. Um einen schnellen Austausch der heißen Gasfüllung gegen eine kalte Gasfüllung zu ermöglichen, ist der zu befüllende Druckgasbehälter mit zwei Anschlußstutzen versehen, die zweckmäßigerweise diametral gegenüberliegend angeordnet sind. Dennoch ist der Austausch der Gasfüllung verbesserungsbedürftig, da das Einfüllen von kaltem Gas und der gleichzeitige Abzug von warmem Gas nicht ohne erhebliche Vermischungserscheinungen im Druckgasbehälter vor sich geht. Um eine hinreichend kalte Gasfüllung in dem zu betankenden Druckgasbehälter einzustellen, muß daher üblicherweise das eingefüllte Gasvolumen mehrfach ausgetauscht werden. Dies verlängert einerseits den Tankvorgang und führt andererseits auch dazu, daß die Wand des Druckgasbehälters einen Teil der Wärme des Gases aufnimmt und später wieder an die kalte Gasfüllung abgibt, diese also wiederum entsprechend erwärmt.

Aus der DD 115 528 A1 ist ein hydraulischer Druckspeicher bekannt, der aus einem Druckbehälter besteht, in dem eine Gummiblase befestigt ist, die über ein Füllventil mit einem Druckgas befüllbar ist. Das außerhalb der Gummiblase in dem Druckgasbehälter befindliche hydraulische Fluid, das durch die Gummiblase unter Druck gehalten wird, kann durch eine Öffnung in der Wand des Druckgasbehälters eingespeist oder abgezogen werden. Auf die Betankung von Fahrzeugen, die mit Druckgasspeichern als Fahrzeugtanks versehen sind, ergeben sich keine Hinweise.

In der CH 350 617 A wird ein Druckbehälter beschrieben, der mit einem Wirkstoff (z.B. Arzneimittel) und einem flüssigen Treibmittel gefüllt ist, mit dem der Wirkstoff ohne Notwendigkeit eines Pumpens aus dem Druckbehälter dosiert abgezogen werden kann. Um eine Vermischung des flüssigen Treibmittels mit dem Wirkstoff und eine Abgabe des Treibmittel nach außen zu vermeiden, ist das Treibmittel, dessen Volumen durch Verdampfung sich erheblich vergrößern kann, in einer elastischen Gasblase im Druckbehälter eingeschlossen. Aus dieser Schrift ergeben sich keinerlei Hinweise auf die Problematik einer schnellen und vollständigen Befüllung eines Fahrzeugtanks mit Druckgas.

Schließlich ist aus der nicht vorveröffentlichten DE 298 16 811 U1 ein System zur Speicherung von brennbaren Kraftgasen (z.B. Erdgas) in einem volumenveränderlichen Speicher bekannt, das als Tankstelle für die Betankung von Fahrzeugen mit Druckgasbehältern als Fahrzeugtank vorgesehen ist. Dieses System ist mit einem Druckgasspeicher versehen, dessen beispielsweise in einer flexiblen Blase eingeschlossenes Gasvolumen durch den Druck einer hydraulischen Flüssigkeit stets unter einem konstanten Druck gehalten wird. Dadurch kann während eines Betankungsvorgangs der zur Verfügung stehende Gasfülldruck konstant auf dem jeweils gewünschten Niveau gehalten werden, ohne daß ein übermäßig großer Druckgasspeicher oder ein besonders leistungsfähiger Kompressor in der Gastankstelle verfügbar sein muss. Im Hinblick auf die Ausgestaltung des Fahrzeugtanks werden in dieser Schrift keinerlei nähere Ausführungen gemacht.

Aufgabe der vorliegenden Erfindung ist es, ein Fahrzeug mit einem Druckgasbehälterals Fahrzeugtank vorzuschlagen, der eine vollständige Betankung auf einen gewünschten Fülldruck in noch kürzerer Zeit ermöglicht.

Gelöst wird diese Aufgabe erfindungsgemäß durch ein Fahrzeug mit den Merkmalen des Patentanspruchs 1. Vorteilhafte Weiterbildungen der Erfindung sind in den Unteransprüchen angegeben.

Die Erfindung sieht vor, daß der zu betankende Druckgasbehälter durch eine innere Trennwand in zwei Teile unterteilt ist, wobei jeder der beiden Teile jeweils durch einen der beiden Anschlußstutzen füllbar und entleerbar ist. Die innere Trennwand trennt dabei die beiden Teile des Volumens des Druckgasbehälters in der Weise voneinander, daß kein nennenswerter Gas- und Wärmeaustausch zwischen den beiden Teilen stattfinden kann. Wesentlich ist, daß die Trennwand innerhalb des Druckgasbehälters orstveränderlich angeordnet, also nicht starr mit der gasdichten Behälterwand verbunden ist. Im einzelnen bedeutet dies, daß Druckunterschiede zwischen den beiden Teilen des Volumens des Druckgasbehälters infolge einer Änderung der Befüllung durch eine entsprechende Verlagerung oder Verformung der Trennwand ausgeglichen werden. Unabhängig von der jeweiligen Verfüllung herrscht also in beiden Teilen des Volumens jeweils praktisch derselbe Druck. Die Entnahme von Gas aus einem der beiden Teilvolumina führt zu einer Verringerung der Größe des betreffenden Teilvolumens, während sich das andere Teilvolumen in entsprechender Weise bei absinkendem Druck vergrößert.

Die Trennwand kann in sich starr ausgebildet sein und sich beispielsweise im Sinne eines 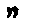 schwimmenden 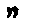 Kolbens entlang der Behälterwand eines mit einer zylindrischen oder mit prismatischen Grundform versehenen Druckgasbehälters bewegen.

Besonders bevorzugt wird jedoch die Ausbildung der Trennwand als innerhalb des Druckgasbehälters angeordnete gasdichte flexible Blase, die an einen der beiden Anschlußstutzen angeschlossen ist. Eine solche Blase muß keine besonders hohen Anforderungen an die Festigkeit erfüllen, sondern sollte zweckmäßigerweise eine möglichst niedrige Wärmeleitfähigkeit aufweisen und zum Beispiel als Kunststoffolie ausgebildet sein. Es ist lediglich erforderlich, daß die Blase gegen die austretenden thermischen Belastungen hinreichend stabil ist. Dies ist bei üblichen Füllvorgängen von Druckgasbehältern, die als Fahrzeugtank eingesetzt werden und zum Beispiel auf 250 bar aufgefüllt werden müssen, der Fall, wenn der für die Blase verwendete Werkstoff über eine Einwirkzeit von mehreren Minuten Temperaturen im Bereich von z.B. 80°C bis 130°C ertragen kann.

Es empfiehlt sich, die beiden Anschlußstutzen in an sich bekannter Weise auf einander gegenüberliegenden Seiten des Druckgasbehälters vorzusehen. Es ist aber auch möglich, beide Anschlußstutzen in unmittelbarer Nähe zueinander anzuordnen.

Die Erfindung wird nachfolgend anhand der in den Figuren dargestellten Ausführungsbeispiele näher erläutert. Es zeigen:
- Fig. 1: eine schematische Darstellung einer Befüllung eines Druckgasbehälters,
- Fig. 2: einen Druckgasbehälter mit schwimmendem Kolben für ein erfindungsgemäßes Fahrzeug,
- Fig. 3: einen Druckgasbehälter mit Blase in weitgehend leerem Zustand für ein erfindungsgemäßes Fahrzeug,
- Fig. 4: einen Druckgasbehälter mit Blase in gefülltem Zustand für ein erfindungsgemäßes Fahrzeug und
- Fig. 5: einen Druckgasbehälter mit zwei Anschlußstutzen auf einer Seite für ein erfindungsgemäßes Fahrzeug.

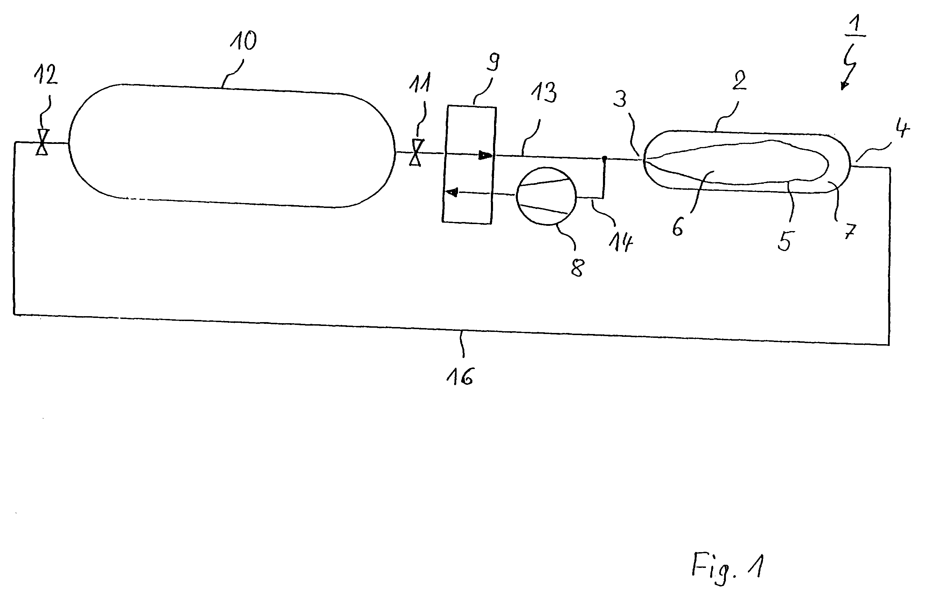

Aus der Figur 1 ist der Ablauf der Befüllung eines in einem erfindungsgemäßen Fahrzeug als Fahrzeugtank vorgesehenen Druckgasbehälters 1 erkennbar. Das Fahrzeug selbst ist ebenso wie in den weiteren Figuren nicht dargestellt. Der Druckgasbehälter 1, der vorzugsweise eine zylindrische Grundform hat und auf den einander gegenüberliegenden Stirnseiten zwei Anschlußstutzen 3, 4 für zwei Druckgasleitungen 13, 16 aufweist, hat eine gasdichte Behälterwand 2, die das Füllvolumen des Druckgasbehälters 1 einschließt. Im Inneren des Druckgasbehälters 1 ist eine aus einem bis mindestens 150°C temperaturstabilen Kunststoff bestehende flexible Blase 5 angeordnet, die mit dem Anschlußstutzen 3 verbunden ist. Auf diese Weise wird das Innere des Druckgasbehälters 1 in die Volumenteile 6 und 7 aufgeteilt. Der Teil 6 des Volumens liegt innerhalb der Blase 5, während der Teil 7 des Volumens zwischen der Außenhülle der Blase 5 und der Behälterwand 2 angeordnet ist. Zur Durchführung der Betankung ist der Druckgasbehälter 1 an seinem Anschlußstutzen 3 an eine Druckgasleitung 13 angeschlossen, durch die Druckgas aus einem ein erheblich größeres Volumen als der Druckgasbehälter 1 aufweisenden Druckgasvorratsbehälter 10 einer Gastankstelle einführbar ist. Die Entnahme einer Gasfüllung für den Druckgasbehälter 1 aus dem Druckgasvorratsbehälter 10 führt daher praktisch nicht zu einem Druckabfall im Druckgasvorratsbehälter 10. Der andere Anschlußstutzen 4 des Druckgasbehälters 1 ist an eine zweite Druckgasleitung 16 angeschlossen, die ebenfalls zum Druckgasvorratsbehälter 10 führt. Die beiden Druckgasleitungen 13 und 16 können durch Sperrventile 11 und 12 geschlossen werden. Von der Druckgasleitung 13 zweigt vor dem Anschlußstutzen 3 eine Gasrückleitung 14 ab, in die eine Gaspumpe 8 eingeschaltet ist. Über ein schaltbares Ventil 9 kann der Druckgasbehälter 1 wahlweise über die Leitung 13 oder über die Leitung 14 und die Gaspumpe 8 mit dem Druckgasvorratsbehälter 10 verbunden werden.

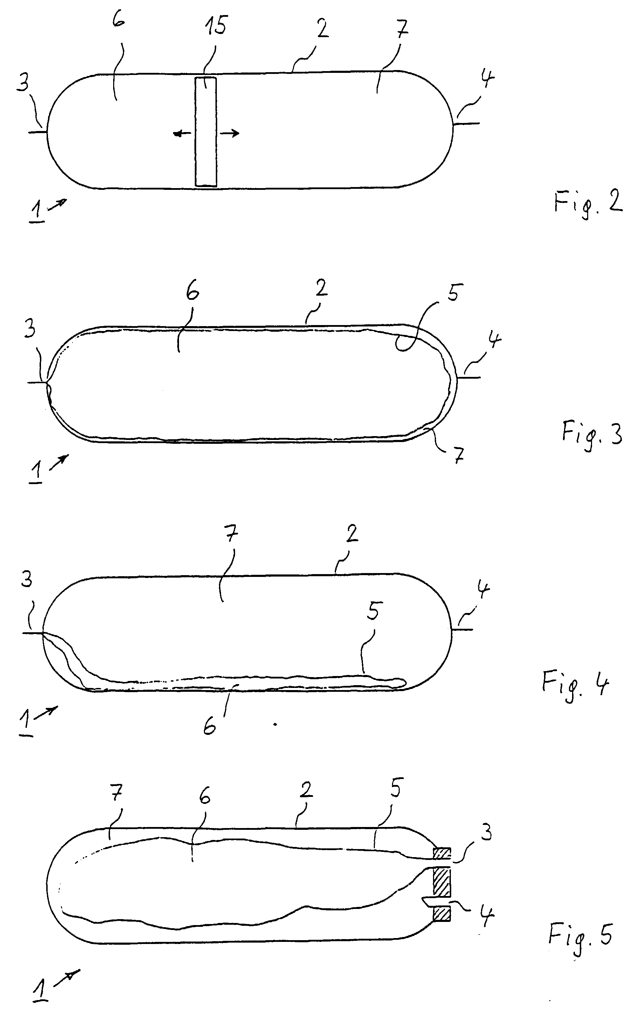

Die Befüllung des Druckgasbehälters 1 in einem erfindungsgemäßen Fahrzeug geht in der Weise vor sich, daß bei geschlossenem Ventil 12 und geöffnetem Ventil 11 in der in Figur 1 gezeigten Stellung des Ventils 9 zunächst Druckgas aus dem Druckgasvorratsbehälter 10 über die Leitung 13 und den Anschlußstutzen 3 in die Blase 5 des Druckgasbehälters 1 eingefüllt wird, bis ein Druckausgleich eingetreten ist. Dies führt dazu, daß sich die Blase 5 in entsprechender Weise gegen das Teilvolumen 7 ausdehnt, so daß die anfangs vorhandene Restfüllung im Teilvolumen 7 des Druckgasbehälters 1 auf den gleichen Druck komprimiert wird wie der Druck innerhalb der Blase 5 (Teilvolumen 6). Auf beiden Seiten der Blase 5 herrscht also der gleiche Druck, so daß keine nennenswerten mechanischen Belastungen auf die Blase 5 einwirken. Im Falle eines praktisch leeren Druckgasbehälters 1 würde sich die Blase 5 weitgehend an die Behälterwand 2 anlegen, wie dies in der schematischen Figur 3 angedeutet ist. In diesem Stadium des Befüllvorgangs befindet sich wegen der unvermeidbar eintretenden Erwärmung des eingefüllten Druckgases eine heiße Gasfüllung von z.B. 70°C bis 90°C in der Blase 5. Sobald der Druckausgleich eingetreten ist, wird das Ventil 12 geöffnet und das Ventil 9 in der Weise umgeschaltet, daß die Leitung 14 mit dem Druckgasvorratsbehälter 10 verbunden wird. Durch Einschalten der Gaspumpe 8 wird nun die heiße Gasfüllung aus der Blase 5 abgesaugt und gleichzeitig durch eine kalte Gasfüllung ersetzt, die über die Druckgasleitung 16 und den Anschlußstutzen 4 in das Teilvolumen 7 des Druckgasbehälters 1 einströmt. Der Tankvorgang wird beendet, sobald die heiße Gasfüllung abgesaugt ist. Dieser Zustand ist schematisch in Figur 4 dargestellt. Man erkennt, daß die Blase 5 praktisch leer ist und nahezu der gesamte Innenraum des Druckgasbehälters von dem Teilvolumen 7 mit der kalten Gasfüllung eingenommen wird. Selbstverständlich könnte die Befüllung des Druckgasbehälters 1 auch in umgekehrter Weise vorgenommen werden, wobei zunächst eine warme Austauschfüllung in das Teilvolumen 7 außerhalb der Blase 5 gegeben wird und die kalte Nutzfüllung danach in die Blase 5 eingefüllt wird (Teilvolumen 6).

Die Ausstattung eines Druckgasbehälters mit einer inneren Blase stellt eine besonders einfache, funktionelle und kostengünstige Lösung der Erfindung dar. Die Erfindung ist jedoch nicht auf diese Ausführungsform beschränkt. Beispielsweise könnte anstelle einer Blase im Druckgasbehälter auch eine verschiebliche starre Trennwand vorgesehen werden, die, wie dies in Figur 2 schematisch dargestellt ist, im Sinne eines schwimmenden Kolbens entlang der Längsachse des Druckgasbehälters 1 verschieblich ist. Die Bewegungsrichtungen der Trennwand 15 sind durch Pfeile dargestellt. Bei einem Druckanstieg infolge einer Befüllung beispielsweise im Teilvolumen 6 würde die Trennwand 15 nach rechts verschoben, so daß dort die vorhandene Füllung des Teilvolumens 7 in entsprechender Weise komprimiert wird, so daß zwischen beiden Volumenteilen 6, 7 ein Druckausgleich eintritt. Die Trennwand 15 verhindert eine Vermischung der Gase zwischen den beiden Teilvolumina 6 und 7, so daß es nicht zu einem nennenswerten Wärmeaustausch kommt. Bei dieser Lösung kommt es, ebenso wie bei der Ausführungsform mit innerer Blase, nicht unbedingt auf eine völlige Gasdichtheit der Trennwand an. Ein geringfügiger Übertritt von Gas in das jeweils andere Teilvolumen ist unbedenklich. Der Gasaustausch darf nur keine so großen Ausmaße annehmen, daß hierdurch ein nennenswerter Wärmeaustausch stattfindet.

In Figur 5 ist eine alternative Ausführungsform des Druckgasbehälters 1 für ein erfindungsgemäßes Fahrzeug dargestellt, die sich von der Ausführung gemäß den Figuren 2 bis 4 dadurch unterscheidet, daß die beiden Anschlußstutzen 3, 4 jeweils auf derselben Seite des Druckgasbehälters 1 dicht nebeneinander angeordnet sind. Auch bei dieser Lösung wird nach der ersten Füllphase bis zum Austausch der warmen Gasfüllung durch eine kalte kein nennenswerter Wärmeaustausch eintreten.

Die vorliegende Erfindung ermöglicht auf eine überraschend einfache Weise eine vollständige Betankung von Fahrzeugtanks mit Druckgas (z.B. Erdgas oder Wasserstoff) innerhalb kürzester Zeit, ohne daß der Druckgasbehälter zur Gewährleistung eines Mindestfülldrucks auf einen höheren Druck aufgefüllt werden muß.

## Patentansprüche

1. Fahrzeug mit einem Druckgasbehälter (1) als Fahrzeugtank, der eine gasdichte Behälterwand (2) und zwei Anschlußstutzen (3, 4) für Druckgasleitungen aufweist,
dadurch gekennzeichnet,
- daß das Volumen des Druckgasbehälters (1) durch eine Trennwand in zwei Teile (6, 7) unterteilt ist, wobei jeder der beiden Teile (6, 7) jeweils durch einen der beiden Anschlußstutzen (3, 4) füllbar und entleerbar ist,
- daß die Trennwand die beiden Teile (6, 7) des Volumens in der Weise voneinander trennt, daß kein nennenswerter unmittelbarer Gasaustausch zwischen den beiden Teilen (6, 7) stattfindet,
- und daß die Trennwand innerhalb des Druckgasbehälters (1) in der Weise ortsveränderlich angeordnet ist, daß durch Änderung der Befüllung bedingte Druckunterschiede zwischen den beiden Teilen (6, 7) des Volumens durch eine Verlagerung oder Verformung der Trennwand ausgeglichen werden.

2. Fahrzeug nach Anspruch 1,
dadurch gekennzeichnet,
daß die Trennwand als innerhalb des Druckgasbehälters (1) angeordnete gasdichte flexible Blase (5) ausgebildet ist, die an einen (3) der beiden Anschlußstutzen (3, 4) angeschlossen ist.

3. Fahrzeug nach Anspruch 2,
dadurch gekennzeichnet,
daß die Blase (5) aus einem Material mit niedriger Wärmeleitfähigkeit gebildet ist.

4. Fahrzeug nach Anspruch 3,
dadurch gekennzeichnet,
daß die Blase (5) aus einer Kunststoffolie gebildet ist.

5. Fahrzeug nach einem der Ansprüche 2 bis 4,
dadurch gekennzeichnet,
daß die Blase (5) gegen thermische Belastungen durch Temperaturen im Bereich von 100°C bis 200°C über Einwirkzeiten von mehreren Minuten Dauer stabil ist.

6. Fahrzeug nach Anspruch 1,
dadurch gekennzeichnet,
daß die Trennwand als innerhalb des Druckgasbehälters (1) angeordnete verschiebliche starre Wand (15) ausgebildet ist, die im Sinne eines schwimmenden Kobens entlang der Längsachse des Druckgasbehälters (1) verschieblich ist.

7. Fahrzeug nach einem der Ansprüche 1 bis 6,
dadurch gekennzeichnet,
daß die Anschlußstutzen (3, 4) für Druckgasleitungen auf einander gegenüberliegenden Seiten des Druckgasbehälters (1)angeordnet sind.
